# EUROPEAN PATENT SPECIFICATION

(11) **EP 2 793 598 B1**
(45) Date of publication and mention of the grant of the patent: **16.03.2016**
(21) Application number: 12808370.6
(22) Date of filing: 18.12.2012
(51) Int. Cl.: A23G 1/00, A23G 1/52

(54) **AERATED CHOCOLATE**
LUFTSCHOKOLADE
CHOCOLAT AÉRÉ

(30) Priority: 23.12.2011 EP 11195519
(43) Date of publication of application: 29.10.2014
(73) Proprietor: Nestec S.A., 1800 Vevey (CH)
(72) Inventor: SUNDARA, Venkata Ramana, York Yorkshire Y030 4WE (GB); SERBESCU, Adorian, R-307160 Dumbravita (RO)
(74) Representative: Kirk, Martin John
(86) International application number: PCT/EP2012/076043
(87) International publication number: WO 2013/092643

(56) References cited:
- WO-A1-2006/122823
- US-A- 5 238 698

## Description

### Field of the Invention

The present invention relates to the field of aerated chocolate, more particularly to a process for preparing an aerated chocolate, and to an aerated chocolate.

### Background of the Invention

Chocolate is generally obtained by mixing sugar and cocoa butter with cocoa liquor or cocoa nibs, followed by refining, conching and tempering. Milk chocolate is prepared in a similar way but with the addition of milk. White chocolate contains, sugar, cocoa butter and milk solids in the absence of cocoa solids. One traditional method of producing milk chocolate (dry process) is by mixing milk powder together with cocoa liquor or cocoa nibs, sugar, and cocoa butter, followed by refining, conching and tempering. Another traditional method of producing milk chocolate (wet process) is by condensing and drying either liquid milk or milk concentrate together with sugar with or without cocoa liquor normally under vacuum and at elevated temperatures to produce a chocolate crumb powder and then mixing the chocolate crumb powder with cocoa butter, cocoa liquor, followed by refining, conching and tempering. Optionally, the cocoa butter may be partially or totally replaced by direct cocoa butter replacements, stearines, coconut oil, palm oil, butter or any mixture thereof to give substitute chocolate materials which are generally referred to as compound, couvertures or ice cream coatings. In this invention, the term "chocolate" includes standard chocolate as well as substitute chocolate such as compound, couvertures or ice cream coating.

The mixture containing sugar, cocoa butter, cocoa liquor or cocoa nibs, and milk (if a milk chocolate is made) is referred to as the chocolate mass. The amounts of sugar, cocoa butter, cocoa liquor or cocoa nibs, and milk (if a milk chocolate is made) present in the chocolate mass may vary within certain limits which are well known to those skilled in the art. In the chocolate making process, mixing the ingredients followed by refining, conching and tempering, the tempered chocolate mass, in the liquid state, is formed in to the desired form, for instance by depositing, moulding e.g. into bars, tablets, or shells, or by enrobing, and solidified. In a typical moulding process, the liquid chocolate is fed into the mould through a depositing head which contains an equal number of nozzles to the number of indents in the moulds transported below the moulds. In order to spread the chocolate evenly throughout the mould and to avoid any blemishes, the mould is gently vibrated. After vibration, the chocolate is solidified by cooling and then removed from the mould.

Chocolate has two major distinguishing characteristics: its flavour and its texture, and there is great consumer interest to provide new textures and flavours to chocolate. Aerated chocolate is well known and contains gas bubbles in order to impart to it a mild, light and creamy touch when eaten.

Aeration can be achieved by forcing gas under high pressure through liquid chocolate so that the gas forms numbers of bubbles resulting in a dilute foam in which the gas forms the discontinuous phase dispersed in the continuous fat phase. Typically, air is used as the gas. However, other gases such as nitrogen or carbon dioxide which do not accelerate oxidation of fat may also be used. Aerated chocolate may be manufactured by filling a tempered chocolate in a mould, then cooling it under reduced pressure thereby expanding the gas spontaneously contained in the chocolate during processing, and finally solidifying the chocolate. Alternatively, aerated chocolate may be manufactured by agitating a tempered chocolate while allowing gas bubbles to be incorporated into the chocolate, then cooling and solidifying the chocolate in a mould. The agitation may be effected while applying pressure.

In order to maintain dispersion of the gas bubbles in the fat continuous phase, it is the necessary to maintain appropriate Casson viscosity (around 1-4 Pa.s) of the chocolate. Otherwise the generated bubbles tend to coalesce during the downstream process in chocolate manufacturing (e.g. due to vibration in moulding). On the other hand, if the chocolate mass is too viscous, e.g. with higher Casson viscosity around 5-8 Pa.s or higher, it is difficult to flow and aerate adequately.

The direct addition of glycerol and/or water to the chocolate recipe has been proposed to improve the heat resistance of chocolate at relatively high ambient temperatures but however it is known that the direct addition of water glycerol to liquid chocolate causes significant viscosity increase (see for instance, CH-A-409603); thickening the chocolate mass and making it difficult to work or aerate.

There is an ongoing need to provide alternative methods for the aeration of chocolate that overcome these disadvantages.

US-A-4889738 discloses a process for increasing the gas content of aerated chocolate by cooling the chocolate and increasing the viscosity. The disclosed aerated chocolate includes gas as a continuous phase and chocolate as a discontinuous phase. The process comprises agitating a melted chocolate, with cooling to a temperature lower than melting point of fat contained in chocolate with continuous inclusion of gas and then by allowing the chocolate to keep under reduced pressure. The process described has a number of drawbacks including that it is very difficult to ensure homogenous mixing of gas as chocolate gets viscous due to cooling. The process also introduces considerable processing complications in view of the complexity of combining with vacuum during downstream process.

EP-A-1307105 concerns a method for making a cellular food product such as aerated chocolate by dispersing and/or dissolving a gas in a food product comprising at least butterfat, then by expansion to produce cell-formation. However, it is necessary to carry out the method under a high pressure of between 8 and 50 bars and at a temperature up to 50°C.

### Summary of the Invention

There is now provided a process for preparing an aerated chocolate which comprises incorporating a solvent component into a gas by bubbling the gas through a reservoir containing the solvent to give a gas phase, and injecting the gas phase into tempered liquid chocolate immediately before the chocolate is moulded so that the gas phase forms a plurality of bubbles forming a discontinuous phase dispersed in a continuous fat phase, to trigger the changes in viscosity precisely at the point of bubble inclusion to stabilise the structure.

The solvent is suitably a food grade solvent. Exemplary solvents include water, glycerol, ethanol, propylene glycol, or triacetin. In a preferred embodiment the solvent is selected from water, glycerol or propylene glycol. Optionally the solvent may comprise a food-grade flavouring and/or colouring.

Advantageously the process of the present invention makes it possible to manufacture a chocolate product which is flowable, workable and easy to aerate, and yet which exhibits limited coalescence of bubbles during the downstream process particularly during vibration of moulds.

In another aspect there is now provided an aerated chocolate product, said chocolate product comprising bubbles of a solvent-containing gas phase. In general bubbles impart a unique texture, in-mouth sensory properties, and greater bulk to chocolate product. The bubble size and distribution are primary parameters contributing to the structure which subsequently impact the texture and flavour release. The proportion of gas phase ranges from 50-60%. The bubble diameters range from 0.5 to 1.5 mm depending on the technology. Where aeration is provided by the process of the invention, the bubble size is dependent on the pressure used to incorporate the gas phase into liquid chocolate. In the aerated chocolate produced according to the present invention the average volume occupied by gas bubbles is from 55-60% of the total volume of the aerated chocolate product, and typically around 58% of the total volume of the aerated chocolate product. The average and bubble diameters of gas bubbles in the aerated chocolate product according to the invention are typically in the range of fro about 0.8 to about 1.2mm. The process according to the present invention makes it possible to provide aerated chocolate product with advantageous low density, in the range of from about 0.4 to about 0.8g/cm³. In preferred embodiments aerated chocolate product has a density in the range of from 0.5 to 0.6 g/cm³.

In one preferred embodiment the solvent comprises a food grade flavouring component. Advantageously in this way there may be prepared a flavoured aerated chocolate, in which the bubbles comprise a flavouring component.

In another preferred embodiment the solvent is selected from water and/or a polyol, preferably water and/or glycerol. Advantageously the process of the present invention makes it possible to incorporate water and/or a polyol, such as glycerol into chocolate whilst avoiding the problems of significant viscosity increase, normally associated with the addition of water and/or polyol to a chocolate mass. In this way the present invention can make it possible to prepare a chocolate product having good shape stability at elevated temperatures (e.g. temperatures up to 40°C, or even higher) and which has sufficiently low viscosity after aeration to permit the chocolate product to be worked with standard techniques, e.g. moulded or deposited using conventional methods and apparatus.

### Detailed Description of the Invention

In the context of the present invention, the gas should be food-acceptable and may be air, nitrogen, nitrous oxide or carbon dioxide.

The solvent is suitably a food grade solvent. Exemplary solvents include water, glycerol, ethanol, propylene glycol or triacetin. In some embodiment the solvent is selected from water, glycerol or propylene glycol. Optionally the solvent may comprise a food-grade flavouring and/or colouring.

The solvent component may be for instance, water, glycerol or ethanol. The gas phased is bubbled through the solvent containing device. It is possible to dissolve colour or flavour into appropriate solvent. The gas bubbled through the solvent system remains in gaseous form however is humidified, and flavoured/coloured if a flavoured/coloured solvent is used. Solvent content of the gas phase corresponding to about 0.2g to about 0.8g, preferably from about 0.3g to 0.6g, of the solvent component per 100g of tempered chocolate has been shown to deliver good sensory attributes in terms of flavour and texture.

When the gas phase bubbled through the specific solvent component comes into contact with liquid chocolate it increases the viscosity, e.g. to give a Casson viscosity of the chocolate in the range of 2 to 4 Pa.s., which assists in stabilising the bubble size and robustness during the downstream process.
The gas phase is advantageously injected into the tempered liquid chocolate just before it is fed to the depositing head after which the aerated chocolate is fed through the nozzles of the depositing head to the moulds for moulding. The moulds are vibrated and the aerated chocolate cooled, solidified and removed from the moulds by conventional methods to provide the aerated chocolate. In the process of this invention, there is a limited coalescence of bubbles during the process of aerated chocolate manufacturing particularly during vibration of moulds and the chocolate has excellent textural and organoleptic properties. The aerated chocolate may also be deposited by other conventional methods, such as by an enrobing process.

When the gas phase includes water or glycerol as the specific solvent component, the water can migrate from the bubbles to the chocolate and provides a novel method of introducing water or glycerol into the chocolate for obtaining heat resistance in addition to the textural improvements.

Advantageously, the solvent component may contain a food grade flavouring or colouring. Examples of suitable flavourings include vanilla, vanillin, ethyl vanillin, orange oil, peppermint oil, strawberry, raspberry, amongst others. Examples of suitable colourings include mint green colour or natural colouring extracts. The incorporation of flavourings into the aerated chocolate according to the process of the invention makes it possible to provide novel flavour notes due the presence of the flavouring component within the bubbles, rather than just in the chocolate mass. The addition of flavouring into the chocolate product at the stage of aeration, before depositing, rather than earlier during the processing, can also help to avoid alterations of the flavour that can happen due to processing conditions.

The addition of the gas phase at the depositing head is convenient enables a quick change-over with little loss of material especially where flavourings are involved.

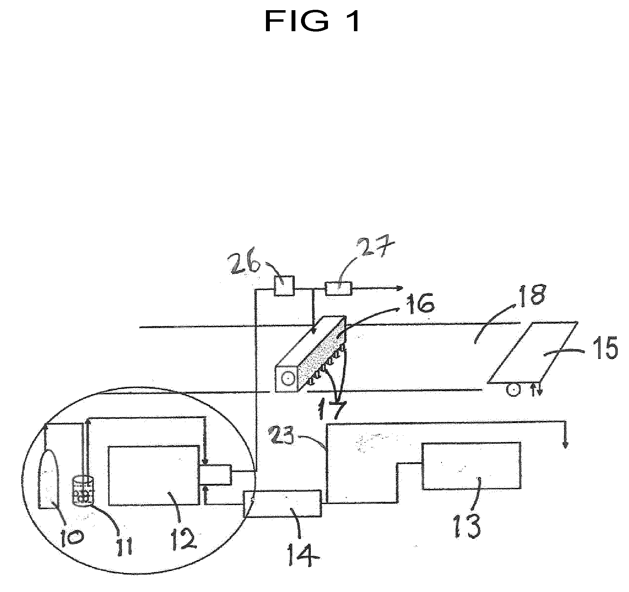

The present invention will now be further described by way of Example only with reference to the accompanying drawing in which Figure 1 represents a diagrammatic view of a chocolate moulding line.

Nitrogen contained in gas cylinder (10) is bubbled into glycerol contained in reservoir (11), equipped with a one-way gas valve, to form a gas phase which is fed to an aerating unit (12). Liquid milk chocolate is pumped from a tempering unit (13) to the aerating unit (12) by a mono pump (14). In the aerating unit (12) the solvent-containing gas phase is introduced into the liquid chocolate to aerate it. A return line (23) may be provided to allow degassing and remelting of chocolate before re-feeding to the tempering unit (13). The aerated chocolate is then fed into moulds (15) through a depositing head (16) provided with a plurality of nozzles (17) corresponding to the number of indents in the moulds (15) which are transported on chains (18) below the nozzles of the depositing head. The moulds are then vibrated to spread the chocolate evenly throughout the mould and the aerated chocolate cooled, solidified and removed from the moulds by conventional methods to provide the aerated chocolate. A Pressure stabiliser (26) (also known in the art as a Samson valve) may be provided in order to accurately regulate the compressed gas so that accurate amounts of gas are incorporated into the liquid chocolate. A back pressure control (27) helps to ensure the homogeneous and consistent mixing and gas and liquid phases. As the aerating unit (12), standard, commercially available aerating equipment may be used. For example known high pressure gas/air incorporating devices may be used. One suitable apparatus is described in WO2005/063036, however other equipment may be used.

## Claims

1. A process for preparing an aerated chocolate which comprises injecting a gas phase into tempered liquid chocolate immediately before the chocolate is moulded so that the gas phase forms a plurality of bubbles forming a discontinuous phase dispersed in a continuous fat phase, wherein the gas phase is obtained by incorporating a solvent component into a gas by bubbling the gas through a reservoir containing the solvent to give the gas phase.

2. A process according to claim 1 wherein the gas is air, nitrogen or carbon dioxide.

3. A process according to claim 1 or 2 wherein the solvent component is selected from water, glycerol, ethanol, propylene glycol or triacetin, or any mixture thereof.

4. A process according to any one of the preceding claims wherein the gas phase is injected into the tempered liquid chocolate to aerate the liquid chocolate just before it is fed to the depositing head, the aerated chocolate is fed through the nozzles of the depositing head to the moulds for moulding, the moulds are vibrated and the aerated chocolate is cooled, solidified and removed from the moulds by conventional methods to provide the aerated chocolate.

5. A process according to any one of the preceding claims for preparing an aerated chocolate having improved heat resistance wherein the gas phase includes water or glycerol as the specific solvent component.

6. A process according to any one of the preceding claims wherein the solvent component contains a flavouring and/or a colouring.

7. A process according to claim 6 **characterised in that** the flavouring is selected from vanilla, vanillin, ethyl vanillin, orange oil, peppermint oil, strawberry, raspberry or any mixture thereof.

8. A process according to claim 6 **characterised in that** the colouring is mint green or a natural colour extract.

9. An aerated chocolate, comprising bubbles of a solvent-containing gas phase dispersed in a fat-continuous chocolate mass.

## Patentansprüche

1. Verfahren zur Herstellung einer Luftschokolade, das das Einspritzen einer Gasphase in temperierte, flüssige Schokolade aufweist, unmittelbar bevor die Schokolade geformt wird, so dass die Gasphase eine Vielzahl von Blasen bildet, die eine diskontinuierliche Phase bilden, welche in einer kontinuierlichen Fettphase dispergiert ist, wobei man die Gasphase erhält, indem eine Lösungsmittelkomponente in ein Gas integriert wird, indem das Gas durch einen das Lösungsmittel enthaltenden Behälter sprudelt, um die Gasphase zu ergeben.

2. Verfahren nach Anspruch 1, wobei das Gas Luft, Stickstoff oder Kohlendioxid ist.

3. Verfahren nach Anspruch 1 oder 2, wobei die Lösungsmittelkomponente ausgewählt ist aus Wasser, Glycerol, Ethanol, Propylenglycol oder Triacetin oder Mischungen daraus.

4. Verfahren nach einem der vorhergehenden Ansprüche, wobei die Gasphase in die temperierte, flüssige Schokolade eingespritzt wird, um die flüssige Schokolade mit Luft zu durchsetzen, kurz bevor sie dem Auftragskopf zugeführt wird, die Luftschokolade durch die Düsen des Auftragskopfes den Formen zum Abformen zugeführt wird, die Formen gerüttelt werden und die Luftschokolade abgekühlt, verfestigt und durch herkömmliche Verfahren aus den Formen herausgenommen wird, um die Luftschokolade zu ergeben.

5. Verfahren nach einem der vorhergehenden Ansprüche zur Herstellung einer Luftschokolade, die eine verbesserte Hitzebeständigkeit besitzt, wobei die Gasphase Wasser oder Glycerol als die spezifische Lösungsmittelkomponente aufweist.

6. Verfahren nach einem der vorhergehenden Ansprüche, wobei die Lösungsmittelkomponente einen Aromastoff und/oder einen Farbstoff enthält.

7. Verfahren nach Anspruch 6, **dadurch gekennzeichnet, dass** der Aromastoff ausgewählt ist aus Vanille, Vanillin, Ethylvanillin, Orangenöl, Pfefferminzöl, Erdbeere, Himbeere oder Mischungen daraus.

8. Verfahren nach Anspruch 6, **dadurch gekennzeichnet, dass** der Farbstoff Minzgrün oder ein natürlicher Farbextrakt ist.

9. Luftschokolade mit Blasen einer ein Lösungsmittel enthaltenden Gasphase, die in einer fettkontinuierlichen Schokoladenmasse dispergiert ist.

## Revendications

1. Procédé pour la préparation d'un chocolat aéré, qui comprend l'injection d'une phase gazeuse dans du chocolat liquide soumis à tempérage immédiatement avant que le chocolat est moulé, de sorte que la phase gazeuse forme une pluralité de bulles formant une phase discontinue dispersée dans une phase grasse continue, dans lequel la phase gazeuse est obtenue par incorporation d'un composant de solvant dans un gaz en faisant barboter le gaz à travers un réservoir contenant le solvant afin d'obtenir la phase gazeuse.

2. Procédé selon la revendication 1, dans lequel le gaz est de l'air, de l'azote ou du dioxyde de carbone.

3. Procédé selon la revendication 1 ou 2, dans lequel le composant de solvant est choisi parmi eau, glycérol, éthanol, propylène glycol ou triacétine, ou un mélange quelconque de ceux-ci.

4. Procédé selon l'une quelconque des revendications précédentes, dans lequel la phase gazeuse est injectée dans le chocolat liquide soumis à tempérage afin d'aérer le chocolat liquide juste avant qu'il soit acheminé à la tête déposeuse, le chocolat aéré est acheminé à travers les buses de la tête déposeuse aux moules pour moulage, les moules sont mis en vibration et le chocolat aéré est refroidi, solidifié et retiré des moules par des procédés conventionnels afin de fournir le chocolat aéré.

5. Procédé selon l'une quelconque des revendications précédentes pour la préparation d'un chocolat aéré ayant une résistance à la chaleur améliorée, dans lequel la phase gazeuse comprend de l'eau ou du glycérol en tant que composant de solvant spécifique.

6. Procédé selon l'une quelconque des revendications précédentes, dans lequel le composant de solvant comprend un aromatisant et/ou un colorant.

7. Procédé selon la revendication 6, **caractérisé en ce que** l'aromatisant est choisi parmi vanille, vanilline, éthylvanilline, huile essentielle d'orange, huile essentielle de menthe, fraise, framboise ou un mélange quelconque de ceux-ci.

8. Procédé selon la revendication 6, **caractérisé en ce que** le colorant est vert menthe ou un extrait de couleur naturelle.

9. Chocolat aéré, comprenant des bulles d'une phase gazeuse contenant du solvant dispersée dans une masse de chocolat de matière grasse continue.
